Europäisches Patentamt

European Patent Office

Office européen des brevets

(11) Veröffentlichungsnummer : **0 056 988**
**B1**

(12)                 **EUROPÄISCHE PATENTSCHRIFT**

(45) Veröffentlichungstag der Patentschrift :
02.05.84

(51) Int. Cl.³ : **A 01 C   5/06**, A 01 C   7/20

(21) Anmeldenummer : 82100441.3

(22) Anmeldetag : 22.01.82

(54) **Vorrichtung zum Säubern der Scheibeninnenflächen eines aus zwei rotierenden Scheiben bestehenden Werkzeuges, insb. für Sämaschinen.**

(30) Priorität : 23.01.81 US 228033

(43) Veröffentlichungstag der Anmeldung :
04.08.82 Patentblatt 82/31

(45) Bekanntmachung des Hinweises auf die Patenterteilung : 02.05.84 Patentblatt 84/18

(84) Benannte Vertragsstaaten :
DE FR GB

(56) Entgegenhaltungen :
US-A- 2 540 262
US-A- 4 034 688
US-A- 4 206 817

(73) Patentinhaber : **DEERE & COMPANY**
**1 John Deere Road**
**Moline Illinois 61265 (US)**

(72) Erfinder : **Stellen, Ronald Michael**
**910 N.W. 2nd**
**Ankeny Iowa 50021 (US)**

(74) Vertreter : **Fricke, Joachim, Dr. et al**
**Dr. R. Döring, Dr. J. Fricke, Patentanwälte Josephspi-**
**talstrasse 7**
**D-8000 München 2 (DE)**

Vorrichtung zum Säubern der Scheibeninnenflächen eines aus zwei rotierenden Scheiben bestehenden Werkzeuges, insb. für Sämaschinen

Die Erfindung betrifft eine Vorrichtung zum Säubern der Scheibeninnenflächen eines aus zwei rotierenden Scheiben bestehenden Werkzeuges, insb. für Sämaschinen, mit den Merkmalen des Oberbegriffs des Anspruchs 1. Eine solche Vorrichtung ist beispielsweise aus der US-A- 10 18 220 bekannt. Bei dieser für Sämaschinen vorgesehenen Vorrichtung ist auf einen Gewindebolzen eine Schraubenfeder aufgefädelt, die mit ihrem rückwärtigen Ende sich an einer Spannmutter und mit ihrem vorderen Ende an einem Druckstück abstützt, welches seinerseits auf zwei schwenkbar an der Stützeinrichtung gelagerte Schaberelemente angreift, um das an den rotierenden Scheiben festsitzende Erdreich abzuschaben.

Unter vielen Arbeitsbedingungen, bei denen aus zwei Scheiben bestehende Furchenöffner an Sämaschinen verwendet werden, ist es notwendig, solche Schaberelemente zwischen den rotierenden Scheiben· einzusetzen, um festsitzendes Erdreich zu entfernen. Die Schaberelemente müssen einen leichten Druck gegen die Rotorscheiben ausüben. Auch sollten die Schaberelemente so frei gelagert sein, daß sie relativ gegenüber den rotierenden Scheiben beweglich sind, um Unterschiede in den Scheiben oder den Scheibenbewegungen aufnehmen zu können. Um diese Bewegungsfreiheit für die Schaberelemente zu erreichen, sind diese normalerweise an einer Stützeinrichtung mit Hilfe einer nur losen Verbindung gehalten, wobei diese unter einem leichten Druck einer Vorspannfeder steht, die ihrerseits auf ein Druckstück einwirkt, welches die Schaber nach außen drängt, wie dies aus der genannten Druckschrift ersichtlich ist. Die lose Verbindung gestattet ein Auf- und Abschwenken der gesamten Schaberanordnung. Dabei kann es passieren, daß die Schaber über die Umfangskante der rotierenden Scheiben hinausragen und durch die rotierenden Scheiben rillenförmig abgenutzt werden. Solche Rillen führen auch zu einer raschen Abnutzung nicht nur an den Schaberelementen, sondern auch an den rotierenden Scheiben. Diese Abnutzung kann dazu führen, daß die rotierenden Scheiben blockiert werden. Blockierte oder stillstehende Scheiben führen aber zu unregelmäßigem Reihenabstand beim Säen.

Das Druckstück, welches die Schaberelemente gegen die rotierenden Scheiben drückt, kann so vorgespant sein, daß es eine freie Bewegung der Schaberelemente verhindert oder einschränkt. Die dabei entstehende Reibung zwischen den Schaberelementen und dem Druckstück führt jedoch ebenfalls zu einer raschen Abnutzung der Teile. Hinzu kommt, daß dann, wenn sich Erdreich oder Schmutz an der Druckfeder, die auf das Druckstück einwirkt, festsetzt, oder wenn die Farbe von Schutzanstrichen die Bewegungsfreiheit der Federwindungen einschränkt, die Schaberelemente unwirksam werden.

Es ist Aufgabe der Erfindung, die aufgezeigten Nachteile zu vermeiden und eine vorrichtung mit den Merkmalen des Oberbegriffs des Anspruchs 1 so weiterzubilden, daß bei einfachem Aufbau eine lange wartungsfreie zuverlässige Arbeitsweise bei nur geringem Abnutzungsgrad gewährleistet ist, ohne daß es zu Blockierungen der Bewegung der rotierenden Scheiben kommen kann.

Diese Aufgabe wird dadurch gelöst, daß die Vorspanneinrichtung ein Blattfederelement aufweist, welches am Schwenklager abgestützt ist und jeweils an den Schaberelementen flächig anliegende Flügelabschnitte besitzt. Aufgrund dieser Ausbildung kann die Anlenkstelle der Schaberelemente fest oder starr an der Stützeinrichtung festgelegt werden. Dennoch ist aufgrund der Ausbildung des Vorspannelementes ein gleichförmiger Schaberdruck gegenüber den rotierenden Scheiben sichergestellt. Aufgrund der Ausbildung wird verhindert, daß die Schaberelemente über den Umfangsrand der rotierenden Scheiben hinauswandern können, so daß die Gefahr der Rillenbildung, der erhöhten Abnutzung, ja gar des Blockierens der Scheiben ausgeschlossen ist. Dennoch können die Schaberelemente sicher und genau den Unregelmäßigkeiten der Scheiben oder Scheibenbewegung folgen, ohne daß der gleichförmige Anpreßdruck beeinträchtigt wird. Auch ist die Anordnung in ihrer Funktionsweise selbst durch dicke Farbanstriche oder durch sich festsetzendes Erdreich oder Schmutz nicht beeinträchtigt. Auch zeigt die Vorrichtung eine lange Lebensdauer, da alle Teile gleichförmig und großflächig abgenutzt werden, wobei das Ausmaß der Abnutzungsgeschwindigkeit beschränkt bleibt.

Wenn von einer Vorrichtung ausgegangen wird, bei der das Schwenklager aus einem Tragelement besteht, an dessen beiden Enden je ein Lager für die beiden Schaberelemente vorgesehen ist, wird die Vorrichtung zweckmäßigerweise so ausgebildet, daß das Tragelement des Schwenklagers zusammen mit einem Befestigungsabschnitt des Blattfederelementes an der Stützeinrichtung festgelegt ist. Dabei weist der ebene Befestigungsabschnitt des Blattfederelementes zweckmäßigerweise eine Breite etwa gleich dem gegenseitigen Abstand der Lager an den Enden des Schwenklagers auf.

Um ein leichtes Festlegen sowohl des Tragelementes des Schwenklagers als auch des Blattfederelementes zu erreichen, kann von einer Vorrichtung ausgegangen werden, bei der die Stützeinrichtung einen von dieser etwa in der Symmetrieebene zwischen den beiden rotierenden Scheiben vorspringenden Bolzen aufweist, auf dem das Schwenklager und die Vorspannfeder aufgefädelt sind. Diese Vorrichtung wird zweckmäßigerweise so weitergebildet, daß das Tragelement des Schwenklagers und der Befestigungsabschnitt des Blattfederelementes unmittelbar zwischen der Stützeinrichtung und einem auf dem Bolzen aufgefädelten Abstandselement festgelegt wird, insb. mittels einer auf dem Bolzen schraubbaren Spannmutter festgespannt wird.

Das Blattfederelement ist vorteilhafterweise einstückig ausgebildet und weist einen gegen das Schwenklager anliegenden Befestigungsabschnitt und zwei von diesem aus divergierende Vorspannflügelabschnitte auf. Dabei ist es vorteilhaft, wenn die Flügelabschnitte von dem Befestigungsabschnitt des Blattfederelementes jeweils von einer Stelle ausgehen, die unmittelbar an das Lager des zugehörigen Schaberelementes angrenzt, und zwar derart, daß jeder Flügelabschnitt an dem zugehörigen Schaberelement vom Lager ausgehend anliegt.

Die Erfindung wird nachfolgend anhand schematischer Zeichnungen an einem Ausführungsbeispiel näher erläutert.

Es zeigen :

Figur 1 eine Seitenansicht einer Sämaschine mit einer Vorrichtung gemäß der Erfindung.

Figur 2 eine perspektivische Ansicht einer Vorrichtung bekannter Art an einer aus zwei rotierenden Scheiben bestehenden Werkzeugvorrichtung, wobei dargestellt ist, wie die bekannten Schaberelemente die Umfangskanten der rotierenden Scheiben überragen können.

Figur 3 eine Draufsicht auf die bekannte Vorrichtung nach Fig. 2.

Figur 4 eine Seitenansicht der bekannten Vorrichtung nach Fig. 3.

Figur 5 in ähnlicher Darstellung wie Fig. 3 eine Draufsicht auf die Vorrichtung gemäß der Erfindung.

Figur 6 in ähnlicher Darstellung wie Fig. 4 eine Seitenansicht der Vorrichtung nach der Erfindung und

Figur 7 eine rückwärtige Ansicht eines Blattfederelementes, das bei der neuen Vorrichtung gemäß Fig. 5 und 6 verwendet wird.

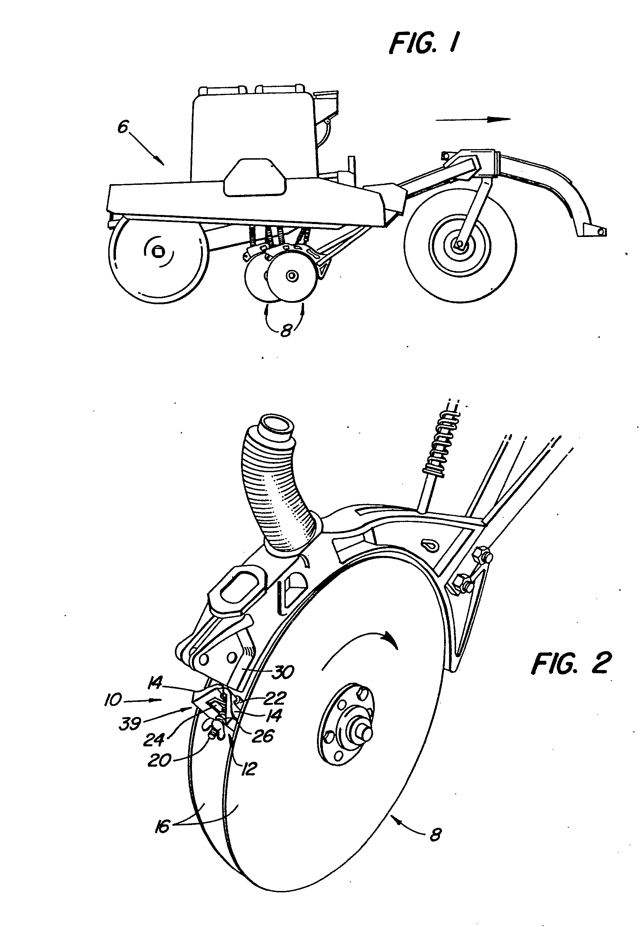

Aus Fig. 1 ist eine übliche Sämaschine 6 ersichtlich, auf der mehrere in Querrichtung in Abständen angeordnete Furchenöffnungsvorrichtungen 8 jeweils mit zwei rotierenden Scheiben gezeigt sind. Die Sämaschine 6 wird über den Boden in Vorwärtsrichtung gezogen. Die Furchenöffnungsvorrichtungen 8 bilden Furchen, welche die Saatkörner aus einer Zumeß- und Verteileinrichtung der Sämaschine aufnehmen. Bei bestimmten Bodenarten sind Schabervorrichtungen notwendig, um den sich an den rotierenden Scheiben festsetzenden Erdboden abzustreifen.

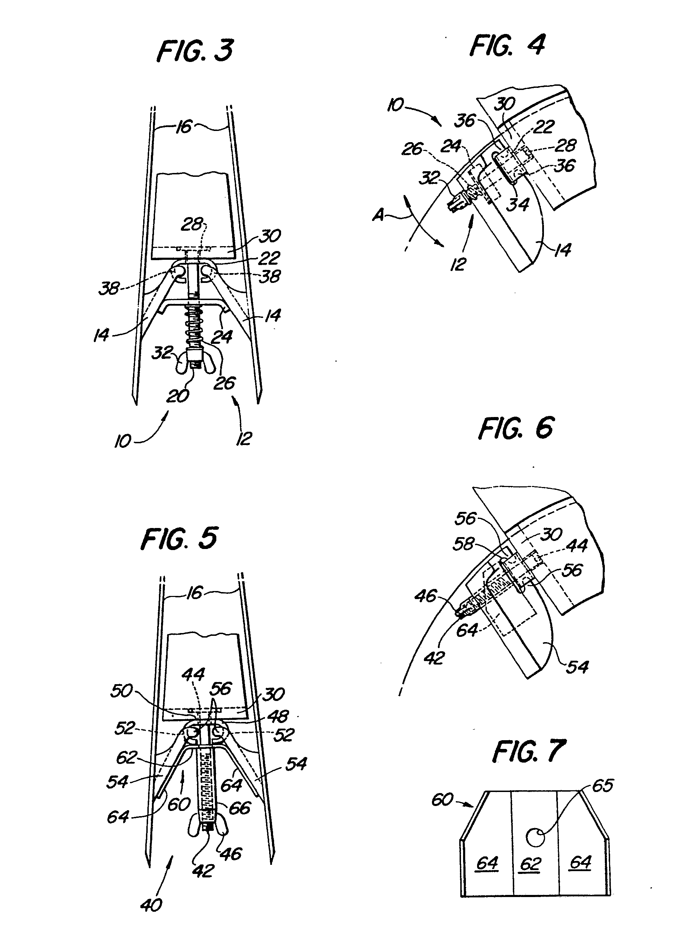

In den Figuren 2 bis 4 ist eine übliche Schabervorrichtung 10 gezeigt. Diese weist eine unter Federvorspannung stehende Verbindung 12, mit der zwei Schaberelemente 14 montiert und gleichzeitig gegen die Innenflächen der rotierenden Scheiben 16 der Furchenöffnungsvorrichtung 8 vorgespannt sind. Die unter Federlast stehende Verbindung 12 umfaßt einen allgemein nach rückwärts ragenden Stift oder Schraubbolzen 20, der ein Schwenklager 22, ein Druckstück 24 und eine Druckfeder 26 trägt, die auf den Bolzen aufgefädelt sind. Ein Haltestift 28 ist mit dem Bolzen starr verbunden und ragt radial von dem Bolzenschaft vor. Das Stiftende des Bolzens 20 wird durch eine Öffnung in einer Stützeinrichtung 30 gefädelt, die einen senkrechten Schlitz zur Aufnahme des Haltestiftes 28 aufweist. Nachdem der Haltestift 28 durch das geschlitzte Loch in der Stützvorrichtung 30 gefädelt ist, wird der Bolzen 20 um 90° verschwenkt, so daß der Stift 28 außer Fluchtung mit dem Schlitz gelangt und der Bolzen damit nicht mehr aus der Stützrichtung abgezogen werden kann. Eine Flügelmutter 32 ist auf das entgegengesetzte Ende des Bolzens 20 aufgeschraubt und gegen die Druckfeder 26 festgezogen, um die Federvorspannung auf die Verbindung 12 an der Stützeinrichtung 30 aufrecht zu erhalten. Die Innenkante jedes Schaberelementes 14 umfaßt einen Schlitz 34 und ein Ohr 36 zur Bildung einer Gelenkverbindung. Die U-förmigen Enden 38 der Gelenkverbindung sind durch den Schlitz 34 geführt und bilden eine schwenkbare Unterstützung für die Schaberelemente. Die Druckfeder 26 wirkt auf ein Druckstück 24, und zwar in Richtung auf das Schwenklager 22, wodurch, wie am besten aus Fig. 3 hervorgeht, die Schaberelemente 14 um ihre Anlenkenden nach außen gegen die Innenflächen der rotierenden Scheiben 16 gedrängt werden. Mit der in den Figuren 2 bis 4 gezeigten Anordnung hält die unter Federlast stehende Verbindung 12 die Schaberanordnung 10 nur lose in ihrer Stellung und ermöglicht ein Verschwenken in einer Richtung, wie sie durch den Pfeil A (Fig. 4) aufgezeigt ist. Die Schaber 14 können daher über die Kante der rotierenden Scheibe in eine Stellung hochrutschen, wie sie bei 39 in Fig. 2 gezeigt ist. Hierbei können sich durch Abnutzung der Schaber im Bereich des Kontaktes mit den rotierenden Scheiben Nuten bilden. Wenn die Druckfeder 26 mit Schmutz oder Farbe zugesetzt ist, kann sich das Druckstück 24 nicht länger mehr frei nach rückwärts oder nach vorne entlang des Bolzenschaftes bewegen, um eine ordnungsgemäße Bewegung der Schaber 14 zu ermöglichen. Abnutzung tritt auch im Bereich des Reibungskontaktes zwischen dem Druckstück 24 und den Schabern 14 ein. Es ist daher ein Problem, bei der Anordnung 10 einen gleichförmigen Schaberdruck und eine ordnungsgemäße Ausrichtung der Schaber sicherzustellen.

In den Figuren 5 und 6 ist die neue Schaberanordnung 40 gezeigt, die durch die Stützeinrichtung 30 getragen wird. Die Anordnung 40 umfaßt einen Bolzen 42 mit einem Haltestift 44 und einer Flügelmutter 46. Dies ist allgemein identisch mit der Anordnung, wie sie zuvor anhand der Figuren 2 bis 4 bei der Anordnung 10 gezeigt und beschrieben ist. Das den Haltestift 44 aufweisende Ende des Bolzens 42 ist auch hier durch ein geschlitztes Loch in der Stützvorrichtung 30 eingesetzt, wonach der Bolzen 42 um 90° gedreht worden ist, um zu verhindern, daß der Bolzen nach links in Fig. 6 wieder aus der Öffnung der Stützeinrichtung heraustreten kann.

Ein Schwenklager 48 umfaßt eine vordere Wand 50, die gegen die Stützeinrichtung 30 anliegt und die eine Öffnung aufweist, durch die der Schaft des Bolzens 42 ragt. Seitlich im gegenseitigen Abstand liegende U-förmige Enden 52 des Schwenklagers 48 biegen sich von der Rückwand 50 nach hinten und enden in der Nähe des Schaftes des Bolzens 42. Schaberelemente 54 haben entsprechende Lagerohren 56 und Schlitze 58, durch die die U-förmigen Enden 52 greifen, um so die Schaberelemente 54 auf dem Schwenklager 48 schwenkbar zu unterstützen.

Eine nachgiebige Blattfeder 60 (Fig. 7) ist vorzugsweise auch aus einem flachen rostfreien Stahlblech hergestellt und umfaßt eine allgemein flache Wand oder einen Befestigungsabschnitt 62. Dieser weist Breitenabmessungen auf, die größer sind als der Durchmesser des Schaftes des Bolzens 42 und vorzugsweise annähernd gleich dem Abstand zwischen den die Schaber aufnehmenden Lagerenden des Schwenklagers 48. Die Blattfeder 60 umfaßt allgemein flache seitliche Flügelabschnitte oder Schenkel 64, die von dem Befestigungsabschnitt 62 aus divergieren. Die seitlichen Flügelabschnitte haben etwa die gleiche Ausdehnung wie die oberen Bereiche der Schaber 54. Die Blattfeder weist senkrechte Abmessungen auf, die im wesentlichen vergleichbar sind mit den senkrechten Abmessungen der Schaberelemente 54 und erreichen vorzugsweise wenigstens ein Drittel bis ein Halb der Abmessungen der Schaber 54. Die seitlichen Flügelabschnitte 64 der Blattfeder werden in Kontakt mit einem erheblichen Flächenbereich der Schaber 54 (Fig. 6) gehalten. Dies trägt dazu bei, einen gleichförmigen Schaberandruck und eine ordnungsgemäße Ausrichtung der Schaber sicherzustellen.

Der Befestigungsabschnitt 62 der Blattfeder 60 umfaßt eine Öffnung 65, durch die der Schaft des Bolzens 42 greift. Die Feder 60 ist auf den Bolzen 42 aufgefädelt, und zwar so, daß der flache Befestigungsabschnitt 62 sich gegen die U-förmigen Enden 52 des Schwenklagers 48 legen. Ein zylindrisches Abstandselement 66 ist außerdem über den Schaft gefädelt und liegt an dem Befestigungsabschnitt 62 an. Die Flügelmutter 46 wird dann gegen das Abstandselement 66 angezogen, um so das Federelement 60 und das Schwenklager 48 starr an der Stützeinrichtung 30 festzuspannen, so daß die Anordnung nicht auf und ab schwenken kann in der Weise, wie dies durch den Pfeil A in Fig. 4 angedeutet ist.

Die seitlichen Schenkel 64 legen sich flächig und flach gegen die Innenflächen der Schaberelemente 54, um diese nach außen um das Schwenklager 48 vorzuschwenken und sie gegen die Scheiben 16 zu drängen und zwar mit gleichförmigem Druck. Das Abstandselement 66 gestattet es, daß das Schwenklager 48 starr an der Stützeinrichtung 30 gehalten ist, so daß die Schaberelemente 54 nicht über die Umfangskanten der rotierenden Scheiben 16 hinausgleiten können. Das Abstandselement 66 weist eine ausreichende axiale Länge auf, um einen bequemen Zugang zu der Flügelmutter 46 zu gestatten, ohne daß man in Konflikt mit der Blattfeder 60 oder den Schaberelementen 54 gelangt.

Die Blattfeder 60 hält zuverlässig und gleichförmig die Schaberelemente 54 in Kontakt mit den Scheiben 16. Die Blattfeder kann nicht durch Farbe, Schmutz oder dergleichen wirkungslos werden. Außerdem ist das Druckstück 24 (Fig. 3) eliminiert. Dadurch erhält man eine freiere Bewegung der Schaberelemente 54 zur Anpassung an eine Taumelbewegung und an Variationen der rotierenden Scheiben. Dadurch ist auch der Reibungskontakt geringer mit der Folge einer geringeren Abnutzung der zusammenwirkenden Teile. Die gesamte Schaberanordnung 40 ist zwischen den rotierenden Scheiben 16 starr befestigt und kann nicht auf und ab schwenken, wie dies bei früheren Vorrichtungen dieser Art nach Fig. 2 üblich ist. Die starre Verbindung ebenso wie der gleichförmige Druck und die freie Bewegung werden durch die Art der Blattfeder 60 verursacht, mit der Folge, daß die Schaberelemente 54 eine gleichförmigere Abnutzung aufweisen und daher eine längere Lebensdauer zeigen als die üblichen Schaber der Anordnung nach Fig. 2 bis 4.

## Ansprüche

1. Vorrichtung zum Säubern der Scheibeninnenflächen eines aus zwei rotierenden Scheiben (16) bestehenden Werkzeuges, insb. für Sämaschinen (6), bestehend aus einer zwischen den beiden Scheiben (16) liegenden Stützeinrichtung (30) für ein Schwenklager (48), an dem zwei Schaberelemente (54) schwenkbar abgestützt sind, und einer Vorspanneinrichtung mit einem Federelement, um die Schaberelemente (54) gleichzeitig in elastischer Anlage jeweils an den Innenflächen der rotierenden Scheiben (16) zu halten, dadurch gekennzeichnet, daß die Vorspanneinrichtung ein Blattfederelement (60) aufweist, welches am Schwenklager (48) abgestützt ist und jeweils an den Schaberelementen (54) flächig anliegende Flügelabschnitte (64) besitzt.

2. Vorrichtung nach Anspruch 1, dadurch gekennzeichnet, daß das Schwenklager (48) starr an der Stützeinrichtung (30) gehalten ist.

3. Vorrichtung nach Anspruch 1 oder 2, bei dem das Schwenklager (48) aus einem Tragelement (50) besteht, an dessen beiden Enden je ein Lager für die beiden Schaberelemente (54) vorgesehen sind, dadurch gekennzeichnet, daß das Tragelement (50) des Schwenklagers (48) zusammen mit einem Befestigungsabschnitt (62) des Blattfederelementes (60) an der Stützeinrichtung (30) festlegbar ist.

4. Vorrichtung nach Anspruch 3, bei dem die Stützeinrichtung (30) einen von dieser etwa in der Symmetrieebene zwischen den beiden rotierenden Scheiben (16) vorspringenden Bolzen (42) aufweist, auf dem das Schwenklager (48) und die Vorspannfeder (60) aufgefädelt sind, dadurch gekennzeichnet, daß das Tragelement (50) des Schwenklagers (48) und der Befestigungsabschnitt (62) des Blattfederelementes (60) unmittelbar zwischen der Stützeinrichtung (30) und einem auf den Bolzen (42) aufgefädelten Abstandselement (66) festlegbar, insb. mittels Spannmutter (46) festspannbar sind.

5. Vorrichtung nach einem der Ansprüche 1 bis 4, dadurch gekennzeichnet, daß das Blattfederelement (60) einstückig ausgebildet ist und einen gegen das Schwenklager (48) anliegenden Befestigungsabschnitt (62) und zwei von diesem aus divergierende Vorspannflügelabschnitte (64) aufweist.

6. Vorrichtung nach Anspruch 5, dadurch gekennzeichnet, daß die Vorspannflügelabschnitte (64) über einen wesentlichen Teil der Ausdehnung der Schaberelemente (54) flächig an diesen anliegen, vorzugsweise über eine Höhenausdehnung von mindestens ein Drittel, insb. von mindestens ein Halb der Höhe des Schaberelementes (54).

7. Vorrichtung nach Anspruch 5 oder 6, dadurch gekennzeichnet, daß die Vorspannflügelabschnitte (64) jeweils ebene Federblechabschnitte sind.

8. Vorrichtung nach einem oder mehreren der Ansprüche 3 bis 7, dadurch gekennzeichnet, daß der ebene Befestigungsabschnitt (62) des Blattfederelementes (60) eine Breite von etwa gleich dem gegenseitigen Abstand der Lager (52) an den Enden des Schwenklagers (48) aufweist.

9. Vorrichtung nach Anspruch 8, dadurch gekennzeichnet, daß die Flügelabschnitte (64) von dem Befestigungsabschnitt (62) des Blattfederelementes (60) jeweils von einer Stelle ausgehen, die unmittelbar an das Lager (52) des zugehörigen Schaberelementes (54) angrenzt, derart, daß jeder Flügelabschnitt (64) an dem zugehörigen Schaberelement (54) vom Lager (52) ausgehend anliegt.

**Claims**

1. Apparatus for cleaning the inside disc surfaces of a tool comprising two rotary discs (16), in particular for seeding machines (6), comprising a support means (30) disposed between the two discs (16), for a pivot mounting (68) on which two scraper elements (54) are pivotally supported, and a biasing means having a spring element for holding the scraper elements (54) simultaneously in resilient contact against the respective inside surfaces of the rotary discs (16), characterised in that the biasing means has a plate-type spring element (60) which is supported on the pivot mounting (48) and which has blade portions (64) which bear with areal contact against the scraper elements (54).

2. Apparatus according to claim 1, characterised in that the pivot mounting (48) is rigidly mounted to the support means (30).

3. Apparatus according to claim 1 or claim 2, wherein the pivot mounting (48) comprises a carrier element (50), at each of the two ends of which is provided a respective mounting for the two scraper elements (54), characterised in that the carrier element (50) of the pivot mounting (48), together with a fixing portion (62) of the plate-type spring element (60), can be secured to the support means (30).

4. Apparatus according to claim 3, wherein the support means (30) has a pin member (42) which projects therefrom substantially in the plane of symmetry between the two rotary discs (16) and on which the pivot mounting (48) and the biasing spring (60) are carried, characterised in that the carrier element (50) of the pivot mounting (48) and the securing portion (62) of the plate-type spring element (60) can be fixed directly, in particular by being clamped by means of clamping nuts (46), between the support means (30) and a spacer element (66) which is fitted on to the pin (42).

5. Apparatus according to one of claims 1 to 4, characterised in that the plate-type spring element (60) is of a one-piece construction and has a securing portion (62) which bears against the pivot mounting (48), and two biasing blade portions (64) which diverge therefrom.

6. Apparatus according to claim 5, characterised in that the biasing blade portions (64) bear in areal contact against the scraper elements (54) over a substantial part of the extent therefrom, preferably over an extent in a heightwise direction of at least one third, in particular at least one half, of the height of the scraper element (54).

7. Apparatus according to claim 5 or claim 6, characterised in that the biasing blade portions (64) are each a respective flat spring plate portion.

8. Apparatus according to one or more of claims 3 to 7, characterised in that the flat securing portion (62) of the plate-type spring element (60) is of a width which is approximately equal to the mutual spacing of the mountings (52) at the ends of the pivot mounting (48).

9. Apparatus according to claim 8, characterised in that the blade portions (64) extend from the securing portion (62) of the plate-type spring element (60) each from a location which directly adjoins the mounting (52) of the associated scraper element (54), in such a way that each blade portion (64), extending from the mounting (52), bears against the associated scraper element (54).

**Revendications**

1. Dispositif pour le nettoyage des faces internes des disques d'un outil constitué par deux disques rotatifs (16), en particulier pour semoirs (6), comportant un dispositif de support (30) placé entre les deux disques (16) et destiné à un palier de pivotement (48), sur lequel deux éléments racleurs (54) sont montés de façon pivotante et un dispositif de sollicitation comportant un organe élastique afin de maintenir les éléments racleurs (54) de façon simultanée dans une condition d'application élastique chaque fois contre les faces internes des disques rotatifs (16), caractérisé en ce que le dispositif de sollicitation comporte un élément formant lame-ressort (60), qui prend appui sur le palier de pivotement (48) et qui comprend des ailes (64) s'appliquant chaque fois à plat contre les éléments racleurs (54).

2. Dispositif suivant la revendication 1, caractérisé en ce que le palier de montage à pivotement (48) est maintenu rigidement sur le dispositif de support (30).

3. Dispositif suivant la revendication 1 ou 2, dans lequel le palier de montage à pivotement (48) est constitué par un élément de support (50) aux deux extrémités duquel il est prévu chaque fois un palier pour les deux éléments racleurs (54), caractérisé en ce que l'élément de support (50) du palier de montage à pivotement (48) peut être fixé sur le dispositif de support (30) conjointement à une partie de fixation (62) de l'élément formant lame-ressort (60).

4. Dispositif suivant la revendication 3, dans lequel le dispositif de support (30) comporte un axe (42) faisant saillie à partir de celui-ci sensiblement dans le plan de symétrie entre les deux disques rotatifs (16) et sur lequel le palier de montage à pivotement (48) et le ressort de sollicitation (60) sont engagés, caractérisé en ce que l'élément de support (50) du palier de montage à pivotement (48) et la partie de fixation (62) de l'élément formant lame-ressort (60) peuvent être bloqués directement entre le dispositif de support (30) et une pièce d'écartement (66) engagée sur l'élément (42), et en particulier serrés au moyen d'un écrou de blocage (46).

5. Dispositif suivant l'une quelconque des revendications 1 à 4, caractérisé en ce que l'élément formant lame-ressort (60) est d'un seul tenant et présente une partie de fixation (62) s'appliquant contre le palier de montage à pivotement (48) et deux ailes de sollicitation (64) s'étendant en divergeant depuis la partie précitée.

6. Dispositif suivant la revendication 5, caractérisé en ce que les ailes de sollicitation (64) s'appliquent à plat contre les éléments racleurs (54) sur une partie notable de l'étendue de ces éléments, de préférence sur une distance en hauteur représentant au moins un tiers et en particulier au moins la moitié de la hauteur de l'élément racleur (54).

7. Dispositif suivant la revendication 5 ou 6, caractérisé en ce que les ailes de sollicitation (64) sont constituées chaque fois par un flan de tôle élastique plan.

8. Dispositif suivant l'une quelconque des revendications 3 à 7, caractérisé en ce que la zone de fixation plane (62) de l'élément formant lame-ressort (60) a une largeur sensiblement égale à l'écartement relatif des paliers (52) ménagés aux extrémités du palier de montage à pivotement (48).

9. Dispositif suivant la revendication 8, caractérisé en ce que les ailes (64) s'étendent depuis la partie de fixation (62) de l'élément formant lame-ressort (60), chaque fois à partir d'un point qui jouxte directement le palier (52) de l'élément racleur conjugué (54), de telle sorte que chaque aile (64) s'applique contre l'élément racleur (54) conjugué à partir du palier (52).

FIG. 1

FIG. 2

FIG. 3

FIG. 4

FIG. 6

FIG. 5

FIG. 7